# EUROPEAN PATENT APPLICATION

(11) **EP 3 647 486 A1**
(43) Date of publication of application: **06.05.2020**
(21) Application number: 17915835.7
(22) Date of filing: 30.06.2017
(51) Int. Cl.: D07B 1/06

(54) **STRANDED WIRE**

(71) Applicant: SUMITOMO ELECTRIC INDUSTRIES, LTD., Osaka-shi, Osaka 541-0041 (JP)
(72) Inventor: OIKAWA, Masashi, Osaka-shi, Osaka 5410041 (JP); KIDO, Toshiro, Osaka-shi, Osaka 5410041 (JP); OSHIMA, Katsuhito, Osaka-shi, Osaka 5410041 (JP); TANAKA, Shuichi, Osaka-shi, Osaka 5410041 (JP); KISHIMOTO, Yuka, Osaka-shi, Osaka 5410041 (JP)
(74) Representative: Boult Wade Tennant LLP
(86) International application number: PCT/JP2017/024254
(87) International publication number: WO 2019/003444

(57) **Abstract**

A stranded wire having a plurality of steel wires twisted together includes, in its cross section perpendicular to its longitudinal direction, a central wire as the steel wire, a plurality of first circumferential wires as the steel wires arranged in contact with the central wire to surround an outer periphery side of the central wire, and a plurality of second circumferential wires as the steel wires arranged in contact with the first circumferential wires to surround an outer periphery side of a region where the first circumferential wires are arranged, the second circumferential wires being greater in yield stress than the central wire and the first circumferential wires. The central wire is in surface contact with the first circumferential wires. The first circumferential wires are in surface contact with the second circumferential wires.

## Description

### Technical Field

The present invention relates to a stranded wire.

### Background Art

A stranded wire that absorbs energy when expanding and contracting in the longitudinal direction is known (see, for example, Japanese Patent Application Laid-Open No. 2013-177745 (Patent Literature 1)).

### Citation List

### Patent Literature

Patent Literature 1: Japanese Patent Application Laid-Open No. 2013-177745

### Summary of Invention

The stranded wire according to the present invention is a stranded wire having a plurality of steel wires twisted together. The stranded wire includes: in its cross section perpendicular to its longitudinal direction, a central wire as the steel wire; a plurality of first circumferential wires as the steel wires arranged in contact with the central wire to surround an outer periphery side of the central wire; and a plurality of second circumferential wires as the steel wires arranged in contact with the first circumferential wires to surround an outer periphery side of a region where the first circumferential wires are arranged, the second circumferential wires being greater in yield stress than the central wire and the first circumferential wires. The central wire is in surface contact with the first circumferential wires. The first circumferential wires are in surface contact with the second circumferential wires.

### Brief Description of Drawings

FIG 1 is a schematic perspective view showing the structure of a stranded wire in Embodiment 1.
FIG. 2 is a schematic cross-sectional view showing a cross section of the stranded wire in Embodiment 1 perpendicular to its longitudinal direction.
FIG. 3 is a schematic cross-sectional view showing a contact portion between the central wire and a first circumferential wire in enlarged view out of the cross section of the stranded wire perpendicular to its longitudinal direction.
FIG. 4 is a schematic cross-sectional view showing a contact portion between a second circumferential wire and a first circumferential wire in enlarged view out of the cross section of the stranded wire perpendicular to its longitudinal direction.
FIG. 5 is a diagram illustrating the principle of energy absorption by a stranded wire.
FIG. 6 is a flowchart schematically illustrating a method of producing a stranded wire.
FIG. 7 is a schematic view illustrating a compression step.
FIG. 8 is a schematic view illustrating the compression step.
FIG. 9 is a schematic view illustrating an exemplary use of the stranded wire.
FIG. 10 is a schematic perspective view showing the structure of a stranded wire in Embodiment 2.
FIG. 11 is a schematic cross-sectional view showing a cross section of the stranded wire in Embodiment 2 perpendicular to its longitudinal direction.
FIG. 12 is a schematic cross-sectional view showing a contact portion between the central wire and a first circumferential wire in enlarged view out of the cross section of the stranded wire perpendicular to its longitudinal direction.
FIG. 13 is a schematic cross-sectional view showing a contact portion between a larger-diameter second circumferential wire and a first circumferential wire in enlarged view out of the cross section of the stranded wire perpendicular to its longitudinal direction.
FIG. 14 is a schematic cross-sectional view showing a contact portion between a smaller-diameter second circumferential wire and a first circumferential wire in enlarged view out of the cross section of the stranded wire perpendicular to its longitudinal direction.
FIG. 15 is a diagram illustrating the state of energy absorption by expansion and contraction of a stranded wire.

### Description of Embodiments

### [Problems to be Solved by the Present Disclosure]

In the stranded wire described above, an increase in amount of energy absorbed by expansion and contraction is desired. An object is thus to provide a stranded wire capable of increasing the amount of energy that is absorbed with expansion and contraction thereof.

### [Effects of the Present Disclosure]

The stranded wire according to the present disclosure can increase the amount of energy that is absorbed with expansion and contraction thereof.

### [Description of Embodiments of the Present Invention]

Embodiments of the present invention will be listed and described first. The stranded wire of the present application is a stranded wire having a plurality of steel wires twisted together. The stranded wire includes: in its cross section perpendicular to its longitudinal direction, a central wire as the steel wire; a plurality of first circumferential wires as the steel wires arranged in contact with the central wire to surround an outer periphery side of the central wire; and a plurality of second circumferential wires as the steel wires arranged in contact with the first circumferential wires to surround an outer periphery side of a region where the first circumferential wires are arranged, the second circumferential wires being greater in yield stress than the central wire and the first circumferential wires. The central wire is in surface contact with the first circumferential wires. The first circumferential wires are in surface contact with the second circumferential wires.

When a stranded wire expands and contracts to absorb energy, the amount of energy absorbed decreases when there occurs an event (slipping off of a steel wire) in which a steel wire constituting the stranded wire moves in the longitudinal direction relative to another steel wire. In the stranded wire of the present application, the central wire is in surface contact with the first circumferential wires, and the first circumferential wires are in surface contact with the second circumferential wires. This increases the frictional force of the first circumferential wires with the central wire and with the second circumferential wires, thereby suppressing slipping off of a steel wire. As a result, the amount of energy absorbed when the stranded wire expands and contracts increases. As described above, the stranded wire according to the present application is capable of increasing the amount of energy that is absorbed with expansion and contraction thereof.

In the stranded wire described above, the plurality of first circumferential wires may be constituted of nine first circumferential wires. The plurality of second circumferential wires may be constituted of nine second circumferential wires. Such a structure is suitable as a structure of the stranded wire of the present application.

In the stranded wire described above, an amount of radial deformation of the central wire due to contact with the first circumferential wire may be 0.3 mm or more. This facilitates obtaining a sufficient frictional force between the first circumferential wire and the central wire. From the standpoint of further improving the frictional force between the first circumferential wire and the central wire, the amount of radial deformation of the central wire due to the contact with the first circumferential wire may be 0.5 mm or more.

In the stranded wire described above, the amount of radial deformation of the central wire due to the contact with the first circumferential wire may be 1.5 mm or less. This facilitates ensuring flexibility of the stranded wire. From the standpoint of more reliably ensuring the flexibility of the stranded wire, the amount of radial deformation of the central wire due to the contact with the first circumferential wire may be 1.2 mm or less, or 1.0 mm or less.

In the stranded wire described above, an amount of radial deformation of the first circumferential wire due to contact with the second circumferential wire may be 0.3 mm or more. This facilitates obtaining a sufficient frictional force between the first circumferential wire and the second circumferential wire. From the standpoint of further improving the frictional force between the first circumferential wire and the second circumferential wire, the amount of radial deformation of the first circumferential wire due to the contact with the second circumferential wire may be 0.5 mm or more.

In the stranded wire described above, the amount of radial deformation of the first circumferential wire due to the contact with the second circumferential wire may be 1.5 mm or less. This facilitates ensuring flexibility of the stranded wire. From the standpoint of more reliably ensuring the flexibility of the stranded wire, the amount of radial deformation of the first circumferential wire due to the contact with the second circumferential wire may be 1.2 mm or less, or 1.0 mm or less.

In the cross section of the stranded wire perpendicular to its longitudinal direction, a region on an outer periphery of a respective one of the plurality of first circumferential wires that is in contact with the central wire may be 5% or more of the outer periphery. This facilitates obtaining a sufficient frictional force between the first circumferential wire and the central wire.

In the cross section of the stranded wire perpendicular to its longitudinal direction, the region on the outer periphery of a respective one of the plurality of first circumferential wires that is in contact with the central wire may be 10% or less of the outer periphery. This facilitates ensuring flexibility of the stranded wire.

In the cross section of the stranded wire perpendicular to its longitudinal direction, a region on the outer periphery of a respective one of the plurality of first circumferential wires that is in contact with one of the plurality of second circumferential wires may be 5% or more of the outer periphery. This facilitates obtaining a sufficient frictional force between the first circumferential wire and the second circumferential wire.

In the cross section of the stranded wire perpendicular to its longitudinal direction, the region on the outer periphery of a respective one of the plurality of first circumferential wires that is in contact with one of the plurality of second circumferential wires may be 10% or less of the outer periphery. This facilitates ensuring flexibility of the stranded wire.

In the stranded wire described above, the central wire, the first circumferential wires, and the second circumferential wires may have outer peripheral surfaces with a surface roughness of 0.5 µm or more in Ra. This facilitates obtaining a sufficient frictional force between the first circumferential wires and the central wire, and between the first circumferential wires and the second circumferential wires.

In the stranded wire described above, the central wire, the first circumferential wires, and the second circumferential wires may have the outer peripheral surfaces with a surface roughness of 10 µm or less in Ra. This facilitates obtaining the stranded wire of appropriate accuracy.

In the stranded wire described above, the central wire and the first circumferential wires may have a yield stress of 200 N/mm² or more and 600 N/mm² or less. This facilitates absorbing energy by causing the central wire and the first circumferential wires to yield when the stranded wire expands and contracts. The yield stress of the central wire and the first circumferential wires may be 350 N/mm² or more and 450 N/mm² or less.

In the stranded wire described above, the second circumferential wires may have a yield stress of 1800 N/mm² or more and 2300 N/mm² or less. This facilitates maintaining the second circumferential wires in an unyielded state when the stranded wire expands. From the standpoint of further increasing the amount of energy that is absorbed with expansion and contraction, the yield stress of the second circumferential wires may be 2200 N/mm² or more and 2300 N/mm² or less. From the standpoint of reducing the production cost of the stranded wire, the yield stress of the second circumferential wires may be 1800 N/mm² or more and 2000 N/mm² or less.

### [Details of Embodiments of the Present Invention]

Embodiments of the stranded wire according to the present invention will now be described with reference to the drawings. In the drawings below, the same or corresponding parts are denoted by the same reference numerals, and the description thereof will not be repeated.

### (Embodiment 1)

### (1) Structure of Stranded Wire

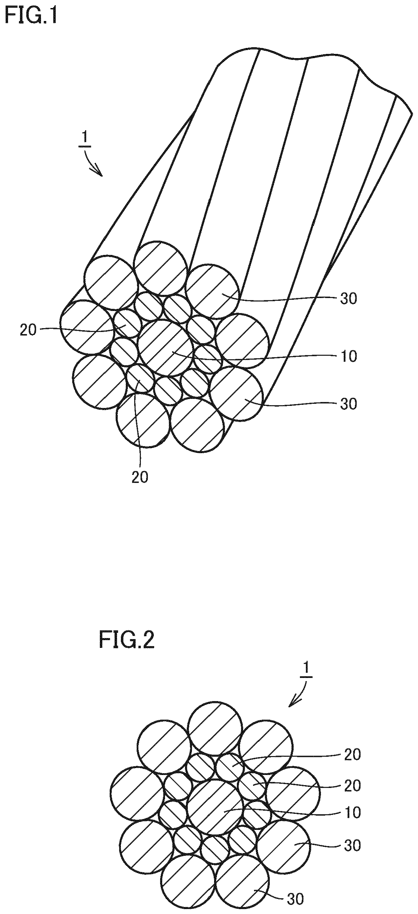

Referring to FIGS. 1 and 2, the stranded wire 1 in the present embodiment is a stranded wire having a plurality of steel wires twisted together. The stranded wire 1, in its cross section perpendicular to its longitudinal direction, includes a central wire 10, a plurality of (in the present embodiment, nine) first circumferential wires 20, and a plurality of (in the present embodiment, nine) second circumferential wires 30. All of the central wire 10, the first circumferential wires 20, and the second circumferential wires 30 are the steel wires. The central wire 10, the first circumferential wires 20, and the second circumferential wires 30 each have a circular shape in the cross section perpendicular to the longitudinal direction. The central wire 10 has a diameter greater than that of a first circumferential wire 20. A second circumferential wire 30 has a diameter greater than that of a first circumferential wire 20. The plurality of first circumferential wires 20 are equal in diameter. The plurality of second circumferential wires 30 are equal in diameter. The central wire 10 and the first circumferential wires 20 are made of a same steel. For the central wire 10 and the first circumferential wires 20, a mild steel wire specified in JIS G3505, for example, can be adopted. For the second circumferential wires 30, a PC steel wire specified in JIS G3536, for example, can be adopted.

The nine first circumferential wires 20 are annularly arranged, in contact with an outer peripheral surface of the central wire 10, to surround an outer periphery side of the central wire 10. The adjacent first circumferential wires 20 are in contact with each other. The second circumferential wires 30 are annularly arranged, in contact with outer peripheral surfaces of the first circumferential wires 20, to surround an outer periphery side of a region where the first circumferential wires 20 are arranged. The adjacent second circumferential wires 30 are in contact with each other. The second circumferential wires 30 are greater in yield stress than the central wire 10 and the first circumferential wires 20.

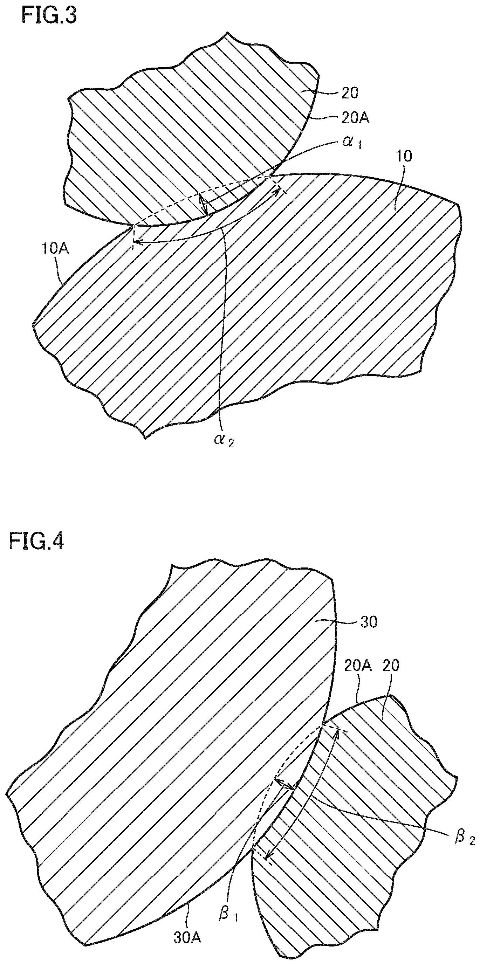

A description will now be given of the state of contact between the central wire 10 and the first circumferential wires 20 and the state of contact between the first circumferential wires 20 and the second circumferential wires 30 with reference to FIGS. 3 and 4. FIG. 3 is a schematic cross-sectional view showing a contact portion between the central wire 10 and a first circumferential wire 20 in enlarged view out of the cross section of the stranded wire 1 perpendicular to its longitudinal direction. FIG. 4 is a schematic cross-sectional view showing a contact portion between a second circumferential wire 30 and a first circumferential wire 20 in enlarged view out of the cross section of the stranded wire 1 perpendicular to its longitudinal direction.

Referring to FIG. 3, in the cross section of the stranded wire 1 perpendicular to its longitudinal direction, the central wire 10 has an outer peripheral surface 10A that is in contact with an outer peripheral surface 20A of each first circumferential wire 20 over a length α₂. In other words, the outer peripheral surface 10A of the central wire 10 is in surface contact with the outer peripheral surface 20A of each first circumferential wire 20. In the present embodiment, a region on an outer periphery of each first circumferential wire 20 that is in contact with the central wire 10 is 5% or more and 10% or less of the outer periphery. In other words, the ratio of the length α₂ to the length of the outer periphery of each first circumferential wire 20 is 5% or more and 10% or less.

The outer peripheral surfaces 20A of the first circumferential wires 20 are higher in hardness than the outer peripheral surface 10A of the central wire 10. Thus, each first circumferential wire 20 and the central wire 10 are in surface contact in the state where the first circumferential wire 20 is pressed into the central wire 10. As a result, the region of the outer peripheral surface 10A of the central wire 10 in contact with the first circumferential wire 20 has a concave shape. An amount α₁ of radial deformation of the central wire 10 due to the contact with a first circumferential wire 20 (i.e. a difference in radius between the contacting region and the other, non-contacting region) is 0.3 mm or more and 1.5 mm or less.

Referring to FIG. 4, in the cross section of the stranded wire 1 perpendicular to its longitudinal direction, the outer peripheral surface 20A of each first circumferential wire 20 is in contact with an outer peripheral surface 30A of a second circumferential wire 30 over a length β₂. In other words, the outer peripheral surface 20A of a first circumferential wire 20 is in surface contact with the outer peripheral surface 30A of a second circumferential wire 30. In the present embodiment, a region on an outer periphery of a first circumferential wire 20 that is in contact with a second circumferential wire 30 is 5% or more and 10% or less of the outer periphery. In other words, the ratio of the length β₂ to the length of the outer periphery of each first circumferential wire 20 is 5% or more and 10% or less.

The outer peripheral surfaces of the second circumferential wires 30 are higher in hardness than the outer peripheral surfaces of the first circumferential wires 20. Thus, a second circumferential wire 30 and a first circumferential wire 20 are in surface contact in the state where the second circumferential wire 30 is pressed into the first circumferential wire 20. As a result, the region of the outer peripheral surface 20A of the first circumferential wire 20 in contact with the second circumferential wire 30 has a concave shape. An amount β₁ of radial deformation of a first circumferential wire 20 due to the contact with a second circumferential wire 30 (i.e. a difference in radius between the contacting region and the other, non-contacting region) is 0.3 mm or more and 1.5 mm or less.

### (2) Absorption of Energy by Stranded Wire

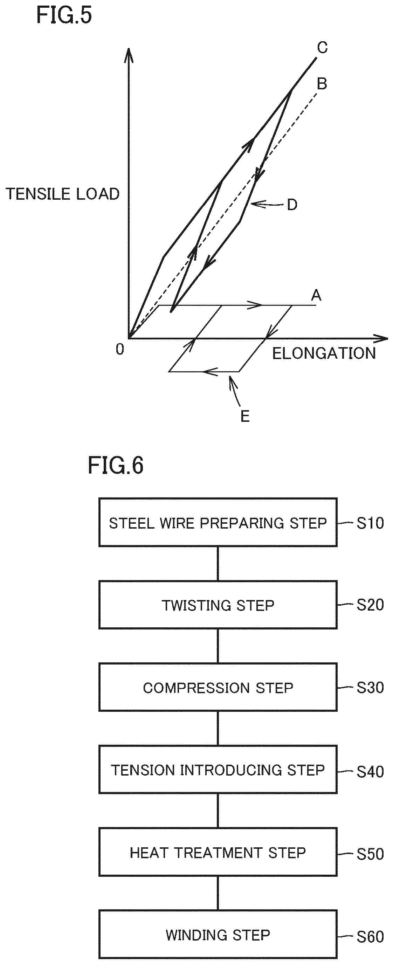

A description will now be given of absorption of energy by expansion and contraction of a stranded wire 1 with reference to FIG. 5. In FIG. 5, the horizontal axis represents elongation in the longitudinal direction of the stranded wire 1, and a vertical axis represents tensile load in the longitudinal direction of the stranded wire 1. In FIG. 5, the thin line A indicates behavior of the central wire 10 and the first circumferential wires 20. In FIG. 5, the broken line B indicates behavior of the second circumferential wires 30. In FIG. 5, the thick line C indicates behavior of the stranded wire 1 as a whole.

Firstly, in a region where the acting tensile load is small, the central wire 10, the first circumferential wires 20, and the second circumferential wires 30 are all within the elasticity range, and are in an unyielded state. The thin line A and the broken line B are thus both straight. In other words, the central wire 10, the first circumferential wires 20, and the second circumferential wires 30 are all in the state where the elongation increases in proportion to the tensile load. When the tensile load exceeds a yield point of the central wire 10 and the first circumferential wires 20, the elongation of the central wire 10 and the first circumferential wires 20 increases with the tensile load kept constant. The thin line A thus has a region parallel to the horizontal axis. On the other hand, the second circumferential wires 30, greater in yield stress than the central wire 10 and the first circumferential wires 20, are still within the elasticity range.

Here, when the tensile load acting on the stranded wire 1 increases and decreases, the central wire 10 and the first circumferential wires 20 repeat tensile yield and compressive yield as shown by the loop E. At this time, as the central wire 10 and the first circumferential wires 20 are surrounded by the second circumferential wires 30 having a higher yield stress, the central wire 10 and the first circumferential wires 20 are capable of repeating the tensile yield and the compressive yield with their buckling being suppressed. The second circumferential wires 30 repeat expansion and contraction within the elasticity range, reciprocating on the broken line B. As a result, the stranded wire 1 as a whole shows the behavior following the loop D. The repetitions of tensile yield and compressive yield of the central wire 10 and the first circumferential wires 20 absorb the energy that causes the stranded wire 1 to expand and contract.

### (3) Advantageous Effects of Stranded Wire 1 of the Present Embodiment

In the stranded wire 1 of the present embodiment, the central wire 10 is in surface contact with the first circumferential wires 20, and the first circumferential wires 20 are in surface contact with the second circumferential wires 30. This increases the frictional force of the first circumferential wires 20 with the central wire 10 and with the second circumferential wires 30, thereby suppressing slipping off of a steel wire constituting the stranded wire 1. As a result, an increased amount of energy is absorbed when the stranded wire 1 expands and contracts. Accordingly, the stranded wire 1 of the present embodiment is a stranded wire capable of increasing the amount of energy that is absorbed with expansion and contraction thereof.

### (4) Preferred Configuration of the Present Embodiment

In the stranded wire 1, outer peripheral surfaces of the central wire 10, the first circumferential wires 20, and the second circumferential wires 30 preferably have a surface roughness of 0.5 µm or more in Ra. This facilitates obtaining a sufficient frictional force between the first circumferential wires 20 and the central wire 10 and between the first circumferential wires 20 and the second circumferential wires 30.

Further, in the stranded wire 1, the surface roughness of the outer peripheral surfaces of the central wire 10, the first circumferential wires 20, and the second circumferential wires 30 is preferably 10 µm or less in Ra. This facilitates obtaining the stranded wire 1 of appropriate accuracy.

In the stranded wire 1, the central wire 10 and the first circumferential wires 20 preferably have a yield stress of 200 N/mm² or more and 600 N/mm² or less. This facilitates absorbing energy by causing the central wire 10 and the first circumferential wires 20 to yield when the stranded wire 1 expands and contracts. The yield stress of the central wire 10 and the first circumferential wires 20 is more preferably 350 N/mm² or more and 450 N/mm² or less.

In the stranded wire 1, the second circumferential wires 30 preferably have a yield stress of 1800 N/mm² or more and 2300 N/mm² or less. This facilitates maintaining the second circumferential wires 30 in an unyielded state when the stranded wire 1 expands. From the standpoint of further increasing the amount of energy absorption with expansion and contraction, the yield stress of the second circumferential wires 30 is preferably 2200 N/mm² or more and 2300 N/mm² or less. From the standpoint of reducing the production cost of the stranded wire 1, the yield stress of the second circumferential wires 30 is preferably 1800 N/mm² or more and 2000 N/mm² or less.

### (5) Stranded Wire Producing Method

A description will now be given of an exemplary method of producing a stranded wire 1 in the present embodiment. Referring to FIG. 6, in the method of producing the stranded wire 1 in the present embodiment, a steel wire preparing step is firstly performed as a step S10. In this step S10, a central wire 10, first circumferential wires 20, and second circumferential wires 30 are prepared, which are steel wires made of steels of appropriate component compositions and having desired shapes and desired mechanical properties. Specifically, for example, steel wires made of steels having appropriate component compositions are prepared, which are subjected to wire drawing as required, so that the central wire 10, the first circumferential wires 20, and the second circumferential wires 30 are prepared.

Next, a twisting step is performed as a step S20. In this step S20, the central wire 10, the first circumferential wires 20, and the second circumferential wires 30 prepared in the step S10 are twisted together to achieve the positional relationship described in conjunction with FIGS. 1 and 2.

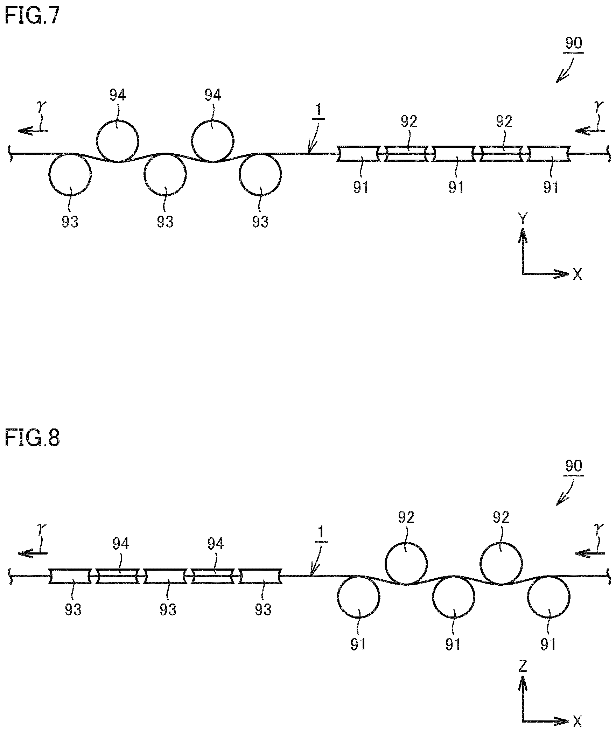

Next, a compression step is performed as a step S30. In this step S30, the stranded wire 1 obtained by twisting the central wire 10, the first circumferential wires 20, and the second circumferential wires 30 together in the step S20 is subjected to compressing in which the stranded wire is radially compressed. FIGS. 7 and 8 show an overview of a device for performing the compression step. FIG. 7 is a schematic plan view of the compressing device observed in a Z axis direction perpendicular to X and Y axis directions which are perpendicular to each other. FIG. 8 is a schematic plan view of the compressing device observed in the Y axis direction perpendicular to the X and Z axis directions which are perpendicular to each other. The compressing device 90 includes first rollers 91, second rollers 92, third rollers 93, and fourth rollers 94.

Referring to FIGS. 7 and 8, the stranded wire 1 obtained in the step S20 is conveyed in a longitudinal direction (X axis direction) along the arrow γ, while being maintained in a straight line shape. The first rollers 91, the second rollers 92, the third rollers 93, and the fourth rollers 94 are arranged to come into contact with an outer peripheral surface of the stranded wire 1 being conveyed.

More specifically, the first rollers 91 and the second rollers 92 are arranged on opposite sides of the stranded wire 1 in the radial direction (Z axis direction) of the stranded wire 1. In the X axis direction, the first rollers 91 and the second rollers 92 are arranged alternately. The third rollers 93 and the fourth rollers 94 are arranged downstream of the first rollers 91 and the second rollers 92. The third rollers 93 and the fourth rollers 94 are arranged on opposite sides of the stranded wire 1 in the radial direction (Y axis direction) of the stranded wire 1. In the X axis direction, the third rollers 93 and the fourth rollers 94 are arranged alternately.

While the stranded wire 1 is being conveyed in the X axis direction, the first rollers 91 and the second rollers 92 are pressed alternately in the Z axis directions, and then the third rollers 93 and the fourth rollers 94 are pressed alternately in the Y axis directions. With this, the stranded wire 1 is compressed in the Z axis directions and then in the Y axis directions. This brings the central wire 10 and the first circumferential wires 20 into surface contact, and the first circumferential wires 20 and the second circumferential wires 30 into surface contact.

Next, a tension introducing step is performed as a step S40. In this step S40, tension is applied to the stranded wire 1 that has undergone the step S30, in the longitudinal direction. With this, the stranded wire 1 is straightened. Thereafter, a heat treatment step (S50) is performed as required, which is followed by a winding step (S60), whereby the stranded wire 1 of the present embodiment is completed. The heat treatment in the step S50 may be blueing heat treatment, for example.

### (6) Use of Stranded Wire

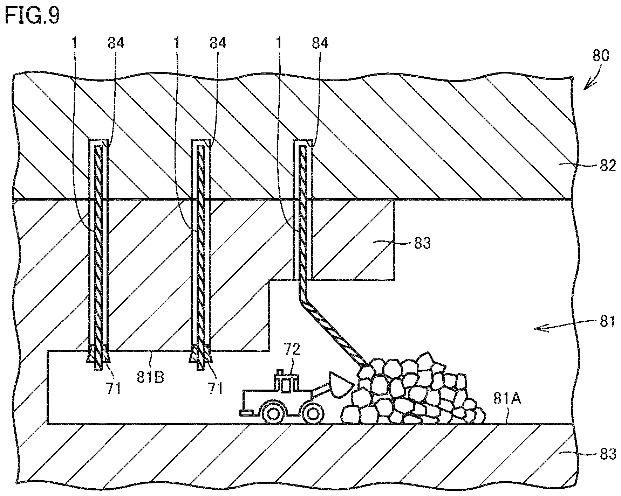

An exemplary use of the stranded wire 1 will now be described. The stranded wire 1 can be used in a coal mine, for example, as described below. Referring to FIG. 9, in a coal mine 80 having a coal layer 83 and a non-coal layer 82 as the remaining region, a mine tunnel 81 is firstly formed in the coal layer 83. Next, a hole 84 is formed from an upper surface 81B of the mine tunnel 81 to penetrate through the coal layer 83 to reach the non-coal layer 82. The hole 84 thus formed is filled with a curable resin (not shown) such as epoxy resin. Thereafter, the stranded wire 1 is inserted into the hole 84. As the curable resin, one that cures in about several hours to several days, for example, is adopted. With this, the stranded wire 1 is fixed inside the hole 84. Then, the stranded wire 1 is tensed, and a wedge member 71 is disposed in the vicinity of an opening of the hole 84 located on the upper surface of the mine tunnel 81. This allows the stranded wire 1 to be fixed in the state where a certain tensile stress is applied thereto.

For mining for coal, for example, an explosive is set in a desired region on the lower surface of the coal layer 83 located above the mine tunnel 81, and is blasted to let coal drop onto the lower surface 81A of the mine tunnel 81. The dropped coal is collected by, for example, a work machine 72 such as a wheel loader capable of traveling on the lower surface 81A of the mine tunnel 81, and is transported to the outside of the mine tunnel 81. At this time, as the stranded wire 1 to which a tensile stress has been applied is placed in the coal layer 83 located above the mine tunnel 81, the vibration energy of blasting in the neighboring region is absorbed by expansion and contraction of the stranded wire 1. This suppresses collapse of the coal layer 83 in the region other than the desired region, ensuring safe and smooth coal mining. While the case of placing the stranded wire 1 in the coal layer 83 located above the mine tunnel 81 was described in the present embodiment, the stranded wire 1 may be placed on a sidewall of the mine tunnel 81, for example, for the purpose of suppressing collapse of the sidewall. The application of the stranded wire 1 is not limited to the use in a coal mine; the stranded wire 1 can be used widely for the purposes of absorbing vibration and other energy.

### (Embodiment 2)

Embodiment 2 as another embodiment of the present invention will now be described. The stranded wire in Embodiment 2 basically has a similar configuration as and produces similar effects as that in Embodiment 1. However, the stranded wire in Embodiment 2 differs from that in Embodiment 1 in terms of arrangement of steel wires.

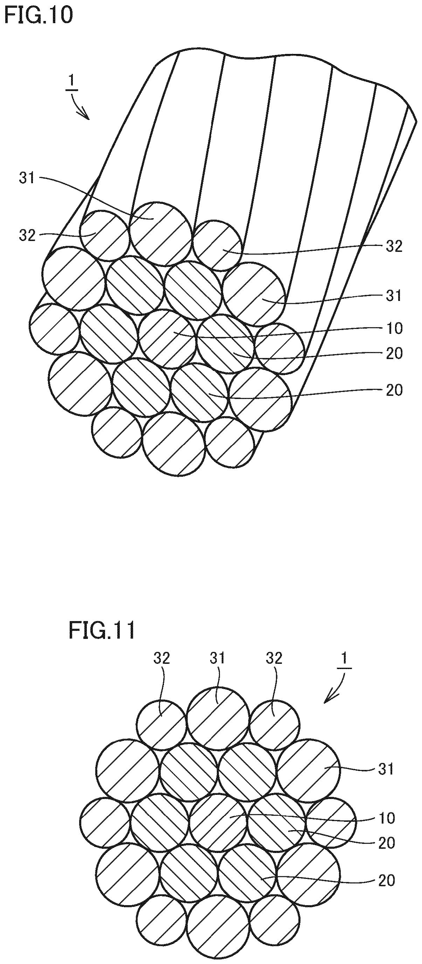

Referring to FIGS. 10 and 11 as well as FIGS. 1 and 2, the stranded wire 1 in Embodiment 2 includes a central wire 10, a plurality of (six) first circumferential wires 20, a plurality of (six) larger-diameter second circumferential wires 31, and a plurality of (six) smaller-diameter second circumferential wires 32. The central wire 10 has a diameter approximately equal to that of a first circumferential wire 20. A larger-diameter second circumferential wire 31 has a diameter greater than that of a first circumferential wire 20. A smaller-diameter second circumferential wire 32 has a diameter smaller than that of a first circumferential wire 20. The plurality of first circumferential wires 20 are equal in diameter. The plurality of larger-diameter second circumferential wires 31 are equal in diameter. The plurality of smaller-diameter second circumferential wires 32 are equal in diameter.

The six first circumferential wires 20 are annularly arranged, in contact with an outer peripheral surface of the central wire 10, to surround an outer periphery side of the central wire 10. The adjacent first circumferential wires 20 are in contact with each other. The larger-diameter second circumferential wires 31 and the smaller-diameter second circumferential wires 32 are alternately arranged, in contact with outer peripheral surfaces of the first circumferential wires 20, to surround an outer periphery side of a region where the first circumferential wires 20 are arranged. The adjacent larger-diameter second circumferential wire 31 and smaller-diameter second circumferential wire 32 are in contact with each other. The larger-diameter second circumferential wires 31 and the smaller-diameter second circumferential wires 32 are greater in yield stress than the central wire 10 and the first circumferential wires 20.

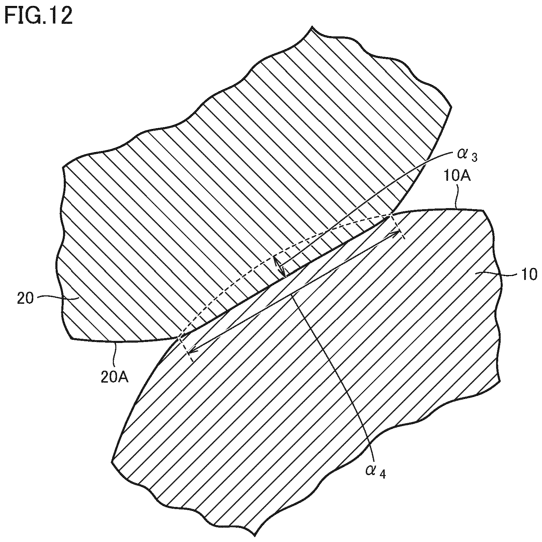

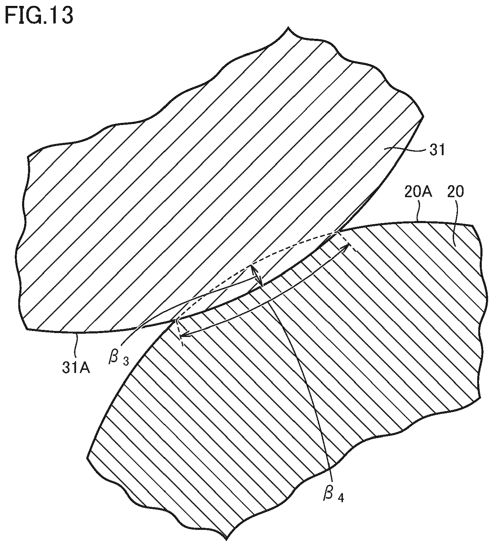

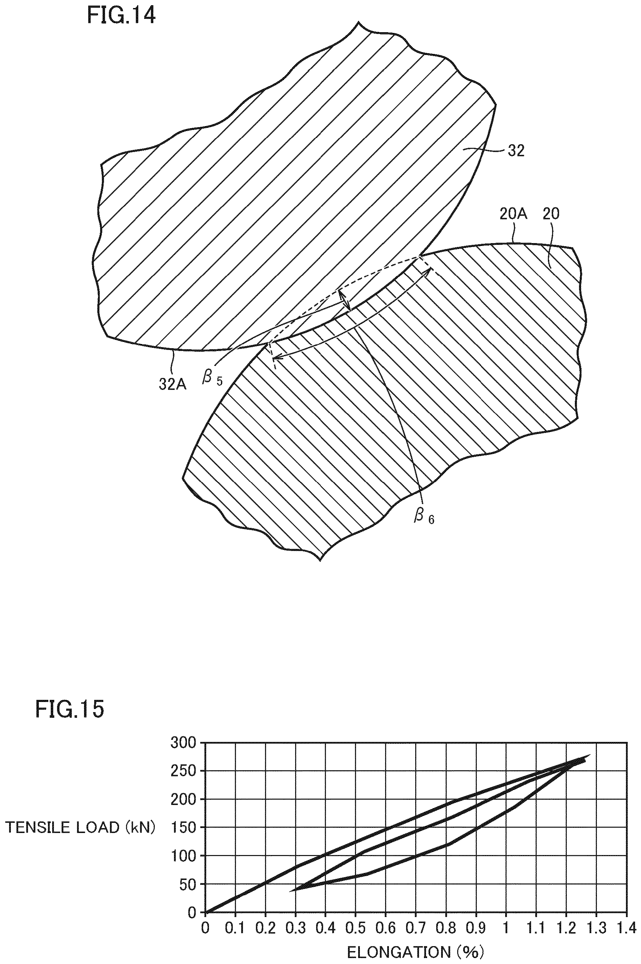

A description will now be given of the state of contact between the central wire 10 and the first circumferential wires 20, the state of contact between the first circumferential wires 20 and the larger-diameter second circumferential wires 31, and the state of contact between the first circumferential wires 20 and the smaller-diameter second circumferential wires 32 with reference to FIGS. 12 to 14. FIG. 12 is a schematic cross-sectional view showing a contact portion between the central wire 10 and a first circumferential wire 20 in enlarged view out of the cross section of the stranded wire 1 perpendicular to its longitudinal direction. FIG. 13 is a schematic cross-sectional view showing a contact portion between a larger-diameter second circumferential wire 31 and a first circumferential wire 20 in enlarged view out of the cross section of the stranded wire 1 perpendicular to its longitudinal direction. FIG. 14 is a schematic cross-sectional view showing a contact portion between a smaller-diameter second circumferential wire 32 and a first circumferential wire 20 in enlarged view out of the cross section of the stranded wire 1 perpendicular to its longitudinal direction.

Referring to FIG. 12, in the cross section of the stranded wire 1 in Embodiment 2 perpendicular to its longitudinal direction, the central wire 10 has an outer peripheral surface 10A that is in contact with an outer peripheral surface 20A of each first circumferential wire 20 over a length α₄. In other words, the outer peripheral surface 10A of the central wire 10 is in surface contact with the outer peripheral surface 20A of each first circumferential wire 20. In the present embodiment, a region on an outer periphery of each first circumferential wire 20 that is in contact with the central wire 10 is 5% or more and 10% or less of the outer periphery. In other words, the ratio of the length α₄ to the length of the outer periphery of each first circumferential wire 20 is 5% or more and 10% or less.

The outer peripheral surfaces 20A of the first circumferential wires 20 and the outer peripheral surface 10A of the central wire 10 are approximately equal in hardness. Thus, each first circumferential wire 20 and the central wire 10 are in surface contact in the state where the first circumferential wire 20 and the central wire 10 are deformed to the same extent. As a result, the region of the outer peripheral surface 10A of the central wire 10 in contact with the first circumferential wire 20 is in a flat state. An amount α₃ of radial deformation of the central wire 10 due to the contact with a first circumferential wire 20 (i.e. a difference in radius between the contacting region and the other, non-contacting region) is 0.3 mm or more and 1.5 mm or less.

Referring to FIG. 13, in the cross section of the stranded wire 1 perpendicular to its longitudinal direction, the outer peripheral surface 20A of each first circumferential wire 20 is in contact with an outer peripheral surface 31A of a larger-diameter second circumferential wire 31 over a length β₄. In other words, the outer peripheral surface 20A of a first circumferential wire 20 is in surface contact with the outer peripheral surface 31A of a larger-diameter second circumferential wire 31. In the present embodiment, a region on an outer periphery of a first circumferential wire 20 that is in contact with a larger-diameter second circumferential wire 31 is 5% or more and 10% or less of the outer periphery. In other words, the ratio of the length β₄ to the length of the outer periphery of each first circumferential wire 20 is 5% or more and 10% or less.

The outer peripheral surfaces 31A of the larger-diameter second circumferential wires 31 are higher in hardness than the outer peripheral surfaces 20A of the first circumferential wires 20. Thus, a larger-diameter second circumferential wire 31 and a first circumferential wire 20 are in surface contact in the state where the larger-diameter second circumferential wire 31 is pressed into the first circumferential wire 20. As a result, the region of the outer peripheral surface 20A of the first circumferential wire 20 in contact with the larger-diameter second circumferential wire 31 has a concave shape. An amount β₃ of radial deformation of the first circumferential wire 20 due to the contact with a larger-diameter second circumferential wire 31 (i.e. a difference in radius between the contacting region and the other, non-contacting region) is 0.3 mm or more and 1.5 mm or less.

Referring to FIG. 14, in the cross section of the stranded wire 1 perpendicular to its longitudinal direction, the outer peripheral surface 20A of each first circumferential wire 20 is in contact with an outer peripheral surface 32A of a smaller-diameter second circumferential wire 32 over a length β₆. In other words, the outer peripheral surface 20A of a first circumferential wire 20 is in surface contact with the outer peripheral surface 32A of a smaller-diameter second circumferential wire 32. In the present embodiment, a region on an outer periphery of a first circumferential wire 20 that is in contact with a smaller-diameter second circumferential wire 32 is 5% or more and 10% or less of the outer periphery. In other words, the ratio of the length β₆ to the length of the outer periphery of each first circumferential wire 20 is 5% or more and 10% or less.

The outer peripheral surfaces 32A of the smaller-diameter second circumferential wires 32 are higher in hardness than the outer peripheral surfaces 20A of the first circumferential wires 20. Thus, a smaller-diameter second circumferential wire 32 and a first circumferential wire 20 are in surface contact in the state where the smaller-diameter second circumferential wire 32 is pressed into the first circumferential wire 20. As a result, the region of the outer peripheral surface 20A of the first circumferential wire 20 in contact with the smaller-diameter second circumferential wire 32 has a concave shape. An amount β₅ of radial deformation of the first circumferential wire 20 due to the contact with a smaller-diameter second circumferential wire 32 (i.e. a difference in radius between the contacting region and the other, non-contacting region) is 0.3 mm or more and 1.5 mm or less.

The stranded wire 1 in the present embodiment also produces the similar effects as in the case of Embodiment 1 described above. Further, according to the stranded wire 1 of the present embodiment, the larger-diameter second circumferential wires 31 and the smaller-diameter second circumferential wires 32 are alternately arranged to surround the outer periphery side of the region where the first circumferential wires 20 are arranged. This allows the outer shape of the cross section of the stranded wire 1 perpendicular to its longitudinal direction to come closer to an exact circle. In contrast, according to the stranded wire 1 of Embodiment 1, the second circumferential wires 30 having a large diameter can be adopted, without the need to adopt smaller-diameter second circumferential wires 32. This allows the second circumferential wires 30 to readily suppress the buckling of the central wire 10 and the first circumferential wires 20 during expansion and contraction of the stranded wire 1.

### Example

A stranded wire of the present application was produced and subjected to an experiment to confirm absorption of energy with expansion and contraction thereof. The experimental procedure was as follows.

Firstly, a stranded wire 1 having a similar configuration as that in Embodiment 1 above was produced. The central wire 10, the first circumferential wires 20, and the second circumferential wires 30 had outer diameters of 5.04 mm, 2.57 mm, and 4.53 mm, respectively. The outer diameter of the stranded wire 1 (the diameter of the circle circumscribing the cross section perpendicular to the longitudinal direction) was 18 mm. For the central wire 10 and the first circumferential wires 20, a mild steel wire specified in JIS G3505 was adopted. For the second circumferential wires 30, a PC steel wire specified in JIS G3536 was adopted. The stranded wire 1 was subjected to a tensile test. The results showed breaking load of 371 kN and elongation at break of 7.8%.

An experiment was then performed in which expansion and contraction of the stranded wire 1 were repeated to confirm the behavior in terms of the relationship between elongation and tensile load. In the experiment, the stranded wire 1 was maintained in the state of receiving tensile load. The upper limit of the tensile load was set to 275.0 kN, which was the upper limit of the elasticity range of the second circumferential wires 30 obtained as a result of the tensile test described above. The lower limit of the tensile load was set to 36.4 kN. The experimental results are shown in FIG. 15.

Referring to FIG. 15, with expansion and contraction of the stranded wire 1, a loop similar to that in Fig. 5 was formed in the relationship between elongation and tensile load. This demonstrates that the expansion and contraction of the stranded wire 1 achieve energy absorption.

It should be understood that the embodiments and example disclosed herein are illustrative and non-restrictive in every respect. The scope of the present invention is defined by the terms of the claims, rather than the description above, and is intended to include any modifications within the scope and meaning equivalent to the terms of the claims.

### Reference Signs List

1: stranded wire; 10: central wire; 10A: outer peripheral surface; 20: first circumferential wire; 20A: outer peripheral surface; 30: second circumferential wire; 30A: outer peripheral surface; 31: larger-diameter second circumferential wire; 31A: outer peripheral surface; 32: smaller-diameter second circumferential wire; 32A: outer peripheral surface; 71: wedge member; 72: work machine;
80: coal mine; 81: mine tunnel; 81A: lower surface; 81B: upper surface; 82: non-coal layer; 83: coal layer; 84: hole; 90: compressing device; 91: first roller; 92: second roller; 93: third roller; and 94: fourth roller.

## Claims

1. A stranded wire having a plurality of steel wires twisted together, comprising:
in a cross section perpendicular to a longitudinal direction,
a central wire as the steel wire;
a plurality of first circumferential wires as the steel wires arranged in contact with the central wire to surround an outer periphery side of the central wire; and
a plurality of second circumferential wires as the steel wires arranged in contact with the first circumferential wires to surround an outer periphery side of a region where the first circumferential wires are arranged, the second circumferential wires being greater in yield stress than the central wire and the first circumferential wires;
the central wire being in surface contact with the first circumferential wires,
the first circumferential wires being in surface contact with the second circumferential wires.

2. The stranded wire according to claim 1, wherein
the plurality of first circumferential wires are constituted of nine said first circumferential wires, and
the plurality of second circumferential wires are constituted of nine said second circumferential wires.

3. The stranded wire according to claim 1 or 2, wherein an amount of radial deformation of the central wire due to contact with the first circumferential wire is 0.3 mm or more.

4. The stranded wire according to any one of claims 1 to 3, wherein an amount of radial deformation of the central wire due to contact with the first circumferential wire is 1.5 mm or less.

5. The stranded wire according to any one of claims 1 to 4, wherein an amount of radial deformation of the first circumferential wire due to contact with the second circumferential wire is 0.3 mm or more.

6. The stranded wire according to any one of claims 1 to 5, wherein an amount of radial deformation of the first circumferential wire due to contact with the second circumferential wire is 1.5 mm or less.

7. The stranded wire according to any one of claims 1 to 6, wherein in the cross section perpendicular to the longitudinal direction, a region on an outer periphery of a respective one of the plurality of first circumferential wires that is in contact with the central wire is 5% or more of the outer periphery.

8. The stranded wire according to any one of claims 1 to 7, wherein in the cross section perpendicular to the longitudinal direction, a region on an outer periphery of a respective one of the plurality of first circumferential wires that is in contact with the central wire is 10% or less of the outer periphery.

9. The stranded wire according to any one of claims 1 to 8, wherein in the cross section perpendicular to the longitudinal direction, a region on an outer periphery of a respective one of the plurality of first circumferential wires that is in contact with one of the plurality of second circumferential wires is 5% or more of the outer periphery.

10. The stranded wire according to any one of claims 1 to 9, wherein in the cross section perpendicular to the longitudinal direction, a region on an outer periphery of a respective one of the plurality of first circumferential wires that is in contact with one of the plurality of second circumferential wires is 10% or less of the outer periphery.

11. The stranded wire according to any one of claims 1 to 10, wherein the central wire, the first circumferential wires, and the second circumferential wires have outer peripheral surfaces with a surface roughness of 0.5 µm or more in Ra.

12. The stranded wire according to any one of claims 1 to 11, wherein the central wire, the first circumferential wires, and the second circumferential wires have outer peripheral surfaces with a surface roughness of 10 µm or less in Ra.

13. The stranded wire according to any one of claims 1 to 12, wherein the central wire and the first circumferential wires have a yield stress of 200 N/mm² or more and 600 N/mm² or less.

14. The stranded wire according to any one of claims 1 to 13, wherein the second circumferential wires have a yield stress of 1800 N/mm² or more and 2300 N/mm² or less.
